# FASCICULE DE BREVET EUROPEEN

(11) **EP 4 126 780 B1**
(45) Date de publication et mention de la délivrance du brevet: **31.01.2024**
(21) Numéro de dépôt: 21712552.5
(22) Date de dépôt: 22.03.2021
(51) Int. Cl.: C03C 19/00, B24B 7/24, B24B 7/26, B24B 19/00, B24B 27/00, B24B 29/00

(54) **ARTICLE VITROCERAMIQUE**
GLASKERAMIKARTIKEL
GLASS-CERAMIC ARTICLE

(30) Priorité: 23.03.2020 EP 20165037; 23.03.2020 FR 2002816
(43) Date de publication de la demande: 08.02.2023
(73) Titulaire: Eurokera S.N.C., 02405 Château Thierry (FR)
(72) Inventeur: LECOMTE, Emmanuel, 02400 NESLES LA MONTAGNE (FR); LUAIS, Erwann, 02400 CHÂTEAU-THIERRY (FR); DABOUINEAU, Jean-Luc, 77140 NEMOURS (FR)
(74) Mandataire: Saint-Gobain Recherche
(86) Numéro de dépôt international: PCT/EP2021/057305
(87) Numéro de publication internationale: WO 2021/191161

(56) Documents cités:
- WO-A1-03/086019
- JP-A- 2009 149 468

## Description

### DOMAINE TECHNIQUE DE L'INVENTION

La présente invention concerne le domaine des vitrocéramiques. Plus précisément, elle concerne un article, ou produit, en vitrocéramique, notamment une plaque vitrocéramique destiné(e) à servir de surface de meuble et/ou de surface de cuisson. Par article vitrocéramique ou en vitrocéramique, on entend un article à base d'un substrat (tel qu'une plaque) en matériau vitrocéramique, ledit substrat pouvant le cas échéant être muni d'accessoires ou d'éléments supplémentaires, décoratifs ou fonctionnels, requis pour son usage final, l'article pouvant désigner tout aussi bien le substrat seul que celui muni d'équipements supplémentaires (par exemple une plaque de cuisson munie de son bandeau de commande, de ses éléments de chauffage, etc).

### ARRIERE-PLAN TECHNOLOGIQUE DE L'INVENTION

Traditionnellement, les plaques vitrocéramiques sont utilisées comme plaques de cuisson, ou elles peuvent aussi être associées à des éléments de chauffage dans d'autres applications, par exemple pour former des inserts de cheminées. Depuis peu, leur utilisation s'étend à d'autres domaines de la vie quotidienne : les plaques vitrocéramiques peuvent ainsi servir de surfaces de meuble, notamment pour former des plans de travail, des ilots centraux, des consoles, etc. la surface qu'elles occupent dans ces nouvelles applications étant plus importante que par le passé.

Une vitrocéramique est à l'origine un verre, dit verre précurseur ou verre-mère ou green-glass, dont la composition chimique spécifique permet de provoquer par des traitements thermiques adaptés, dits de céramisation, une cristallisation contrôlée. Cette structure spécifique en partie cristallisée confère à la vitrocéramique des propriétés uniques.

Il existe actuellement différents types de plaques en vitrocéramique, chaque variante étant le résultat d'études importantes et de nombreux essais, étant donné qu'il est très délicat de faire des modifications sur ces plaques et/ou sur leur procédé d'obtention sans risquer un effet défavorable sur les propriétés recherchées : en particulier, pour pouvoir être utilisée comme plaque de cuisson, une plaque vitrocéramique doit généralement présenter une transmission dans les longueurs d'onde du domaine du visible à la fois suffisamment basse pour masquer au moins une partie des éléments de chauffage sous-jacents au repos et suffisamment élevée pour que, selon les cas (chauffage radiant, etc), l'utilisateur puisse détecter visuellement les éléments de chauffage en état de marche dans un but de sécurité ; elle doit également présenter une transmission élevée dans les longueurs d'onde du domaine de l'infrarouge dans le cas notamment des plaques à foyers radiants et permettre de visualiser les afficheurs et témoins lumineux du bandeau de commande donnant des indications sur les niveaux de puissance des zones de chauffe et le fonctionnement de la table de cuisson. Les plaques vitrocéramiques doivent également présenter une résistance mécanique suffisante telle qu'exigée dans leur domaine d'utilisation. En particulier, pour pouvoir être utilisée comme plaque de cuisson dans le domaine de l'électroménager ou comme surface de meuble, une plaque vitrocéramique doit présenter une bonne résistance à la pression, aux chocs (support et chute d'ustensiles, etc), etc.

Les plaques de cuisson vitrocéramiques les plus répandues sont de couleur sombre, en particulier de couleur noire ou brune ou brun-orangé. Mais il existe également des plaques constituées d'un substrat transparent avec un opacifiant en face inférieure, ainsi que des plaques en particulier blanches opalescentes ou blanches opaques.

Il existe des plaques vitrocéramiques commercialisées sous le nom Kerablack+ par la société Eurokera. Elles présentent une rugosité Ra de l'ordre de 0,1 µm et Rt de 1,0 µm.

La rugosité Ra est un paramètre de rugosité bien connu et est la rugosité moyenne arithmétique du profil (moyenne arithmétique des valeurs absolues des écarts entre les pics et les creux successifs), définie sur une longueur d'évaluation, et la rugosité Rt est la hauteur totale du profil entre la vallée la plus profonde et le pic le plus haut sur la longueur d'évaluation. La rugosité Ra et la rugosité Rt telles que considérées ici sont mesurées selon la norme ISO 4287 sur une longueur d'évaluation de 4 mm à l'aide d'un palpeur de référence SJ401 de la société Mitutoyo.

Il existe également dans le commerce des plaques vitrocéramiques noires polies (Kanger^{®}) dont la rugosité de surface est de Ra = 0,03 µm et Rt = 0,4 µm. L'abrasion de la surface qui est inévitable lors de leur utilisation en raison du nettoyage avec des éponges abrasives et des mouvements de récipients de cuisson ne modifie pas la brillance de cette vitrocéramique. Cependant, le polissage représente une étape supplémentaire dans le procédé de fabrication que l'on souhaite éviter en raison du coût et de la complexité de la mise en oeuvre.

Il existe également dans le commerce des plaques vitrocéramiques fortement texturées en face supérieure (Kanger^{®} non polies) dont la rugosité de surface est de Ra 0,8 µm et Rt de 6,3 µm. Ces plaques présentent un inconvénient majeur. L'abrasion de surface provoque une forte variation de brillance.

De plus, ces fortes texturations rendent la surface difficile à nettoyer car les résidus d'aliments logés dans les creux de la surface sont difficiles à éliminer.

On connait de JP2009149468, des plaques vitrocéramiques ayant des Ra compris entre 0,04 et 0,13 µm ayant pour objectif d'éviter l'éblouissement provoqué par la réflexion des éclairages de la cuisine, tout en préservant un niveau de brillance des surfaces de cuisson. Pour obtenir ce niveau de rugosité, il est décrit un procédé complexe qui nécessite le sablage d'au moins un des rouleaux de laminage avec une poudre d'alumine composée de grains dont la taille moyenne est de 550 µm, suivi de son polissage. Le profil de rugosité obtenu sur le substrat vitrocéramique est alors de forme particulière où les creux sont plats et les pics présentent une surface courbe. Ce procédé délicat et complexe engendre une augmentation substantielle du coût de fabrication des plaques vitrocéramiques.

De plus, cette faible rugosité de surface avec ce profil particulier donnant une très faible Rt ne permet pas de masquer suffisamment les défauts pouvant se produire pendant le processus de fabrication qui s'effectue en deux étapes principales : le formage du ruban de verre plat par laminage entre des rouleaux puis la transformation du verre plat en vitrocéramique.

### RESUME DE L'INVENTION

La présente invention a donc cherché à mettre au point des produits vitrocéramiques améliorés permettant de conserver une résistance à l'abrasion acceptable à leur surface, tout en limitant la visibilité des défauts pouvant se produire pendant le processus de fabrication. Les défauts présents dans le verre plat obtenu par laminage peuvent être des bulles, des piqures, des pierres (grains de matière première non fondus), des dévitrifiés ou des « patchs » provenant de de dépôts sur les rouleaux de laminage. Les défauts générés au cours du procédé de transformation et de l'utilisation de la surface de cuisson peuvent être des rayures isolées, des zones abrasées résultant des frottements d'ustensiles de cuisine (faisceaux de rayures) ou de frottement avec des éponges ainsi que des taches.

En particulier, l'invention vise de nouvelles plaques vitrocéramiques destinées à être utilisées avec un ou des éléments de chauffage telles que des plaques de cuisson, ou destinées à servir de surface de meubles, ces plaques conservant une résistance à l'abrasion acceptable, sans nuire aux autres propriétés recherchées pour leur usage, notamment sans nuire à leur facilité d'entretien et de nettoyage, ni à leur résistance, en particulier mécanique, sans être préjudiciable à leur durée de vie, tout en veillant à proposer une solution simple et si possible flexible autorisant la présence de décors ou de fonctions additionnelles en fonction des besoins.

Ce but est atteint grâce à une micro texturation particulière de la face supérieure du produit vitrocéramique mis au point selon l'invention.

La présente invention concerne donc un nouvel article vitrocéramique, comprenant au moins un substrat, tel qu'une plaque, en vitrocéramique, ledit substrat présentant une face comportant une micro texturation telle que la rugosité de surface moyenne arithmétique, Ra, mesurée selon la norme ISO 4287, est comprise entre 0,14 et 0,40 µm, de préférence entre 0,15 et 0,30 µm et la rugosité totale Rt, mesurée selon la norme ISO 4287, est comprise entre 1,15 et 5,00 µm, de préférence entre 1,25 et 3,00 µm.

La face présentant la micro texturation est en particulier destinée à former la face supérieure de l'article vitrocéramique, c'est-à-dire la face tournée vers l'utilisateur.

Avantageusement, ledit substrat est à base d'une vitrocéramique d'aspect sombre, ou noire transparente de 3 à 6 mm, ayant de manière intrinsèque une transmission lumineuse TL sous illuminant D65 inférieure à 20%, de préférence inférieure à 10% et une transmission optique inférieure à 30%, de préférence inférieure à 20% et de manière encore préférée inférieure à 15%, pour une longueur d'onde de 625 nm (les propriétés optiques sont mesurées à cette longueur d'onde, caractéristique de l'émission des afficheurs rouge).

La transmission optique est déterminée de façon connue en faisant le rapport entre l'intensité transmise et l'intensité incidente à une longueur d'onde donnée.

Par « de manière intrinsèque », on entend que le substrat possède une telle transmission en lui-même, sans la présence d'un quelconque revêtement.

Les mesures optiques sont faites selon la norme EN 410. En particulier, la transmission lumineuse TL est mesurée selon la norme EN 410 en utilisant l'illuminant D65 sous 2°, et est la transmission totale (notamment intégrée dans le domaine du visible et pondérée par la courbe de sensibilité de l'œil humain), tenant compte à la fois de la transmission directe et de l'éventuelle transmission diffuse, la mesure étant faite par exemple à l'aide d'un spectrophotomètre muni d'une sphère intégrante (en particulier avec le spectrophotomètre commercialisé par la société Perkin Elmer sous la référence Lambda 950)

L'invention pourrait, cependant, tout aussi bien s'appliquer à des plaques vitrocéramiques claires, en particulier blanches opalescentes ou blanches opaques.

D'autres paramètres permettent d'identifier les profils de rugosité, comme le Ssk, Sp et Sv.

Ssk est le facteur d'asymétrie par rapport au plan moyen. Ssk < 0 indique que la distribution de la hauteur est asymétrique en dessous du plan moyen (prédominance des creux à la surface). Ssk > 0 indique que la distribution de la hauteur est asymétrique au-dessus du plan moyen (prédominance des pics à la surface).

Sp représente la hauteur maximale des pics.

Sv représente la profondeur maximale des creux.

Selon l'invention, la micro texturation présente de préférence un facteur d'asymétrie, Ssk, compris entre -0,20 et -1,1 µm, de préférence entre -0,3 et -1 µm et une hauteur maximale des pics, Sp, comprise entre 0,7 et 10,0 µm, de préférence comprise entre 0,8 et 5,0 µm. En particulier, la profondeur maximale des creux, Sv, de la micro texturation est comprise entre 0,7 et 10,0 µm, de préférence entre 0,8 et 5,0 µm.

Généralement, la face inférieure de l'article selon l'invention, présente des picots de forme ellipsoïdale dont la hauteur est comprise entre 60 et 120 µm, de préférence comprise entre 80 et 100 µm. En particulier, les picots sont espacés de 250 à 500 µm, de préférence de 300 à 400 µm, en mesurant la distance bord à bord, à la verticale.

La présente invention a également pour objet un procédé de préparation d'un article vitrocéramique comme décrit ci-dessus, par laminage de verre mère entre deux rouleaux, dont un a subi un traitement de grenaillage, à l'aide de particules d'une matière ayant une dureté Vickers HV1 comprise entre 3 et 10, de préférence entre 4 et 8 GPa ; le verre mère ainsi laminé est ensuite soumis à un procédé de céramisation traditionnel.

Avantageusement, le traitement de grenaillage est réalisé à l'aide de particules ayant un diamètre moyen compris entre 0,2 et 2 mm et préférence compris entre 0,5 et 1,2 mm. Ces particules peuvent, par exemple être des particules d'acier martensitique. Le grenaillage est avantageusement un grenaillage par projection pneumatique, de préférence avec une pression de 2 à 6 bars, voire de 3 à 5 bars. Les particules sont typiquement projetées à un débit de 1 à 5 kg/min, voire 2 à 4 kg/min, de préférence perpendiculairement à la surface du rouleau. Le taux de recouvrement du grenaillage est avantageusement de 90 à 110%, de préférence d'environ 100%, c'est-à-dire que la surface du rouleau est entièrement grenaillée. Le rouleau ainsi grenaillé n'est de préférence pas soumis à un polissage avant son utilisation dans le procédé selon l'invention. Le rouleau grenaillé présente typiquement une rugosité Ra de 0,6 à 1,2 µm, voire de 0,8 à 1,0 µm, et de préférence une rugosité Rt supérieure à 4 µm, de préférence supérieure à 8 µm.

Pour mémoire, la fabrication des plaques vitrocéramiques s'opère généralement comme suit : dans un four de fusion, on fond le verre de composition choisie pour former la vitrocéramique, puis on lamine le verre fondu en un ruban ou feuille standard en faisant passer le verre fondu entre des rouleaux de laminage et on découpe le ruban de verre aux dimensions souhaitées. Les plaques ainsi découpées sont décorées avec un décor à base d'émail déposé par sérigraphie ou jet d'émail, puis céramisées de manière connue en soi ; la céramisation consistant à cuire les plaques suivant le profil thermique choisi pour transformer le verre en un matériau polycristallin appelé « vitrocéramique » dont le coefficient de dilatation est nul ou quasi-nul et qui résiste à un choc thermique pouvant aller en particulier jusqu'à 700°C. La céramisation comprend généralement une étape d'élévation progressive de la température (par exemple entre 650 et 830°C) jusqu'au palier de nucléation, dont la durée varie entre 5 et 90 minutes), une nouvelle élévation de la température pour permettre la croissance des cristaux (dans un intervalle allant par exemple de 850 à 1100°C (pour les vitrocéramiques opalescentes/opaques), avec maintien de la température du palier de croissance cristalline pendant plusieurs minutes (par exemple de 5 à 30 minutes) puis un refroidissement rapide jusqu'à la température ambiante.

Le cas échéant, le procédé comprend également une opération de découpe (généralement avant céramisation), par exemple par jet d'eau, traçage mécanique à la molette, etc. suivie par une opération de façonnage (meulage, biseautage, ...).

Le substrat (ou l'article selon l'invention lui-même s'il n'est formé que du substrat) est généralement (sous forme de) une plaque, destinée notamment à être utilisée avec, en particulier à couvrir ou recevoir, au moins une source lumineuse et/ou un élément de chauffage ou destinée à servir de surface de meuble. Ce substrat (ou respectivement cette plaque) est généralement de forme géométrique, en particulier rectangulaire, voire carrée, voire circulaire ou ovale, etc, et présente généralement une face tournée vers l'utilisateur en position d'utilisation (ou face visible ou externe, généralement la face supérieure en position d'utilisation), une autre face généralement cachée, par exemple dans un châssis ou caisson de meuble, en position d'utilisation (ou face interne, généralement la face inférieure en position d'utilisation), et une tranche (ou chant ou épaisseur). La face supérieure ou externe est généralement plane mais peut aussi présenter localement au moins une zone en relief et/ou au moins une zone en creux et/ou au moins une ouverture et/ou des bords biseautés, ces variations de forme constituant notamment des variations continues de la plaque. La face inférieure ou interne peut également être plane et lisse ou munie de picots.

Le substrat peut être à base de toute vitrocéramique, ce substrat présentant avantageusement un coefficient de dilatation thermique ou « Coefficient of Thermal Expansion », CTE, nul ou quasi-nul, en particulier inférieur (en valeur absolue) à 30.10-7 K-1 entre 20 et 700°C, notamment inférieur à 15.10-7K-1, voire inférieur à 5.10-7 K-1 entre 20 et 700°C.

En particulier, on utilise un substrat d'aspect noir ou brun, permettant, en combinaison avec des sources lumineuses placées dessous, d'afficher des zones lumineuses ou des décors, tout en masquant les éventuels éléments sous-jacents. Il peut être notamment à base d'une vitrocéramique noire comprenant des cristaux de structure β-quartz au sein d'une phase vitreuse résiduelle, la valeur absolue de son coefficient de dilatation thermique étant avantageusement inférieure ou égale à 15.10-7 K-1, voire à 5.10-7 K-1, telle que la vitrocéramique des plaques commercialisées sous le nom Kerablack+ par la société Eurokera.

Le substrat selon l'invention peut le cas échéant être revêtu des motifs habituels à base d'émaux ou éventuellement d'une couche de peinture opacifiante sur une partie de la face inférieure du substrat.

L'article selon l'invention peut en outre comprendre, associés ou combinés au substrat, une ou plusieurs sources lumineuses et/ou un ou plusieurs éléments de chauffage (ou éléments chauffants, tels qu'un ou plusieurs éléments radiants ou halogènes et/ou un ou plusieurs brûleurs à gaz atmosphérique et/ou un ou plusieurs moyens de chauffage par induction). La ou les sources peuvent être intégrées dans ou couplées à une ou des structure(s) de type afficheur(s), à un bandeau de commande électronique à touches sensitives et affichage digital, etc, et sont avantageusement formées d'afficheurs constitués de diodes électroluminescentes, plus ou moins espacées, éventuellement associées à un ou plusieurs guides optiques.

L'article selon l'invention présente notamment une bonne tenue thermique compatible avec l'utilisation de divers types de chauffages, et ne pose pas de problèmes d'entretien, de rayures ou d'abrasion comme indiqué précédemment.

Les exemples suivants illustrent sans la limiter la présente invention, avec référence aux figures.

### BREVE DESCRIPTION DES FIGURES

[Fig. 1] est une image obtenue par interférométrie optique d'une plaque vitrocéramique selon l'exemple comparatif 1 ;
[Fig. 2] est une image de même type d'un article selon l'exemple 1 de l'invention ;
[Fig. 3] est une image de même type d'un article selon l'exemple 2 de l'invention ;
[Fig. 4] est une image de même type d'un article selon l'exemple 3 de l'invention.
[Fig. 5] est un graphe qui met en relation l'écart de brillance et le paramètre Ssk pour les trois exemples comparatifs et les trois exemples selon l'invention.

### DESCRIPTION DETAILLEE

Pour la fabrication des plaques vitrocéramique selon l'invention, la surface du rouleau de laminage supérieur est modifiée de la manière suivante :
Un grenaillage pneumatique est réalisé par projection, perpendiculairement à la surface d'un rouleau polie miroir, d'une grenaille constituée notamment d'acier (martensitique) comprenant des grains dont la taille est de l'ordre de 0.5 à 1.2 mm. La pression de grenaillage est d'environ 4 bars. La grenaille est projetée à un débit d'environ 3 kg/min. En 4 passes, on assure la formation d'un état de surface dit satiné sur la surface du rouleau correspondant à une rugosité Ra entre 0,8 et 1µm et Rt supérieure à 8 µm.

Une fois le grenaillage terminé, on lave le rouleau à l'alcool.

On obtient donc une texturation particulière et aléatoire de la surface du rouleau.

Le rouleau inférieur est préparé pour réaliser les picots.

Les rouleaux ainsi préparés sont utilisés pour laminer du verre mère en continu pendant plusieurs dizaines d'heures (« cycle de laminage ») lors duquel un ruban de verre mère défile en continu entre les deux rouleaux. Après ce cycle de laminage, le rouleau supérieur subit des étapes successives de polissage jusqu'à obtenir une surface polie miroir avant de pouvoir à nouveau être texturé par grenaillage comme décrit plus haut.

Les exemples selon l'invention sont des échantillons de verre laminé, prélevés à des moments différents, au cours du même cycle de laminage.

### Exemple 1

L'échantillon de verre mère texturé de l'exemple 1 est prélevé après une heure de fonctionnement des rouleaux de laminage.

### Exemple 2

L'échantillon de verre mère texturé de l'exemple 2 est prélevé à un temps t1 correspondant à plusieurs dizaines d'heures de fonctionnement des rouleaux de laminage.

### Exemple 3

L'échantillon de verre mère texturé de l'exemple 3 est prélevé à un temps t2 (environ égal à deux fois t1) de fonctionnement des rouleaux de laminage.

Les mesures de rugosité Ra et Rt sont mesurées à l'aide d'un rugosimètre Mitutoyo Sj-400 selon la norme ISO 4287 sur une longueur d'évaluation de 4 mm en 15 points sur des plaques de 594 X 525 mm. La caractérisation de surface est complétée par interférométrie optique qui permet d'obtenir les paramètres Ssk, Sp et Sv établis selon la norme ISO25178. L'ensemble de ces caractéristiques est reporté dans le tableau 1.

Les 3 exemples selon l'invention ont été comparés à 3 produits du marché qui constituent les exemples comparatifs : Eurokera KB+ (exemple comparatif 1), Kanger^{®} non poli (exemple comparatif 2, Kanger^{®} poli (exemple comparatif 3).

**[Table 1]**

| | Ra (µm) | Rt (µm) | Ssk (µm) | Sp (µm) | Sv (µm) |
|---|---|---|---|---|---|
| Exemple comparatif 1 | 0,1 ± 0,2 | 1,0 ± 0,2 | -0,41 ± 0,21 | 0,65 ± 0,12 | 1,09 ± 0,09 |
| Exemple comparatif 2 | 0,8 ± 0,2 | 6,3 ± 1,4 | -1,25 ± 0,16 | 13,67 ± 9,78 | 16,27 ± 2,63 |
| Exemple comparatif 3 | 0,03 ± 0,00 | 0,4 ± 0,1 | 0.37 ± 0.22 | 0.01 ± 0.00 | 0.01 ± 0.00 |
| Exemple 1 | 0,20 ± 0,01 | 1.68 ± 0,18 | -0.35 +/-0.12 | 1.46 +/-0.31 | 2.31 +/- 0.43 |
| Exemple 2 | 0,17 ± 0,03 | 1.41 ± 0,22 | -0,69 ± 0,12 | 1.10 ± 0,32 | 2.26± 0,11 |
| Exemple 3 | 0,16 ± 0,03 | 1.38 ± 0,28 | -0,90 ± 0,13 | 0,90 ± 0,11 | 2.53 ± 0,5 |

On soumet des échantillons de vitrocéramique à un test d'abrasion représentatif de l'usage dans une cuisine, tel que défini ci-dessous.

L'écart de brillance est mesuré comme suit.

L'écart de brillance est la différence entre la brillance de la zone abrasée et la brillance de la zone non abrasée divisée par la brillance de la zone non abrasée. Plus cet écart est grand en valeur absolue, plus le contraste entre une zone abrasée et non abrasée est important.

Les zones abrasées sont préparées à l'aide d'un disque de diamètre 18 mm obtenu d'un papier abrasif de type carbure de silicium (SiC) de grain P240 de marque Norton. Le disque est monté sur un appareil de type Linear Abraser commercialisé par la société Taber, et une pression de 5 N/cm2 est appliquée sur le disque de SiC. Un aller-retour (un cycle) est réalisé à une vitesse de 15 cycles/min sur une course de 38,1 mm. Trois zones abrasées sont réalisées sur les échantillons à caractériser.

La mesure de brillance est réalisée à l'aide d'un appareil de type Color i7 commercialisé par la société X-Rite.

Sur chacune des trois zones abrasées, trois mesures sont faites : une au centre, deux de part et d'autres de la première. La valeur de brillance d'un échantillon abrasé correspond alors à la moyenne de brillance des trois zones abrasées.

Sur un échantillon non abrasé, 9 mesures sont aussi réalisées et leur moyenne est calculée pour obtenir la valeur de la brillance de la zone non abrasée. L'écart de brillance est donné avec un écart-type sur la moyenne de l'écart de brillance.

Les résultats sont reportés dans le tableau 2.

Le tableau 2 reprend également la caractérisation des zones situées à moins 0,8 µm par rapport au max. de distribution des hauteurs, c'est-à-dire la part de la surface occupée par ces zones (dist 0,8), l'aire moyenne des zones et la densité des zones (voir images 1 à 4)

Ces caractéristiques sont établies grâce à un traitement d'image réalisé sur les images obtenues par interférométrie optique.

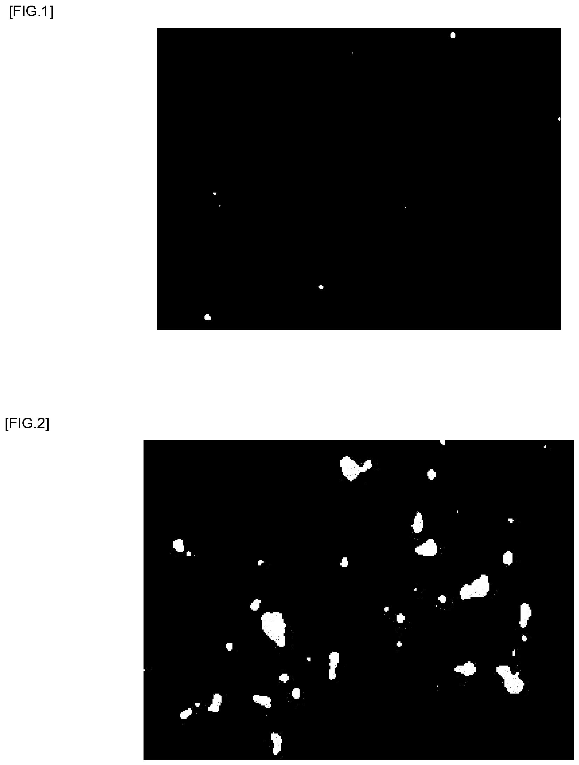

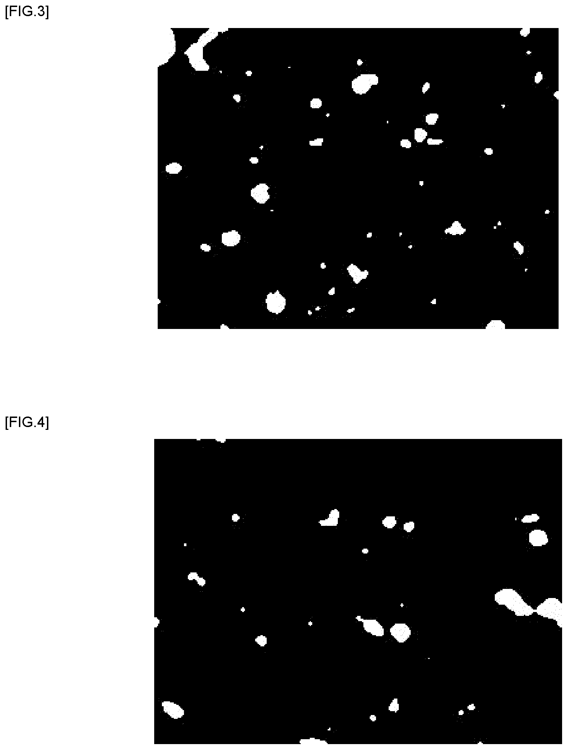

Les zones situées à une profondeur de moins 0,8 µm par rapport au maximum de distribution des hauteurs apparaissant en blanc sur les Fig 1 à 4.

**[Table 2]**

| | | Zones à moins 0.8 µm par rapport au max. de distribution des hauteurs | | |
|---|---|---|---|---|
| | Ecart de brillance (%) | (dist _{0,8}) (%) | Aire moyenne des creux (*10⁻³ mm²) | Densité (/mm²) |
| Exemple comparatif 1 Eurokera KB+ | -7.9 +/- 3.3 | 0.07 | 0.6 | 1.2 |
| Exemple comparatif 2 Kanger^{®} non poli | -21.1 +/- 3.4 | | | |
| Exemple comparatif 3 Kanger^{®} poli | 0 | | | |
| Exemple 1 | -7.7 +/- 1.8 | 3.2 | 5.2 | 6.2 |
| Exemple 2 | -11.7 +/- 4.25 | 3.8 | 4.6 | 8.2 |
| Exemple 3 | -13.3 +/- 2.2 | 2.7 | 5.9 | 4.6 |

On peut observer du tableau 1 que les valeurs de hauteur de pics et de profondeur de creux sont significativement plus importantes pour les exemples selon l'invention que pour l'exemple comparatif 1 (Eurokera KB+). Le facteur d'asymétrie Ssk, qui n'est pas significativement différent de l'exemple comparatif 1 au début du cycle de laminage, décroit sensiblement au cours du celui-ci (exemples 2 et 3 selon l'invention).

On peut observer du tableau 2 que le pourcentage de la surface occupée par des creux (% de surface occupée par des zones situées à une profondeur de 0,8 µm par rapport au maximum de distribution des hauteurs (Sp)) obtenu grâce à une analyse des images établies par interférométrie optique est bien plus important pour les exemples selon l'invention que pour l'exemple comparatif 1. L'aire ainsi que la densité des creux à la surface des vitrocéramiques selon les exemples de l'invention sont nettement plus importantes par rapport à l'exemple comparatif 1. Les creux sont perceptibles à l'œil nu sous forme de points brillants à la surface dans des conditions d'observation standard (les plaques sont observées avec une inclinaison de 45° à 60 cm de distance, avec un éclairage d'intensité 2000 Lux environ).

Ces caractéristiques sont déterminantes pour expliciter la diminution de la perception des défauts. La densité de creux, plus importante à la surface des vitrocéramiques selon l'invention, modifie la perception des défauts présents à la surface de la vitrocéramique pouvant se produire pendant le procédé de fabrication des plaques dans les conditions d'observation décrites ci-dessus.

A titre d'exemple et de manière nullement limitative, les défauts dont la perception est atténuée sur la surface des articles selon l'invention en comparaison avec la surface de l'exemple comparatif 1 peuvent être des bulles dont le diamètre est inférieur à 0,8 mm, des rayures isolées de moins de 50 mm de longueur et des taches de moins de 1 mm de diamètre.

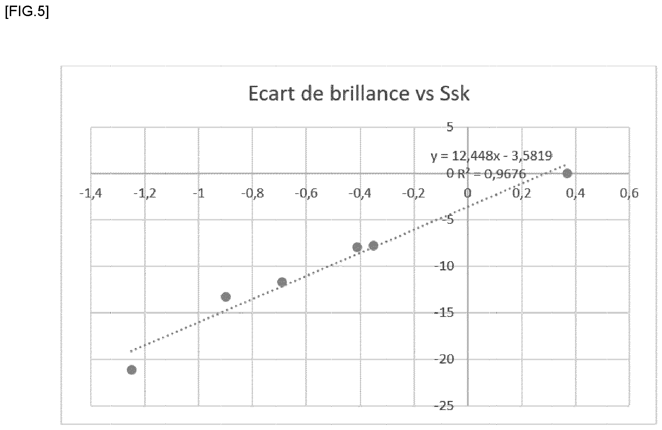

On constate que l'écart de brillance (valeurs dans le tableau 2) est corrélé au paramètre Ssk (valeurs dans le tableau 1) pour les trois exemples comparatifs et les trois exemples selon l'invention, comme le montre la droite tracée sur la Fig 5. La valeur R² est proche de 1.

L'écart de brillance (en valeur absolue) obtenu avec les vitrocéramiques selon l'invention est légèrement supérieur à celui de la vitrocéramique correspondant à l'exemple comparatif 1 (Eurokera KB+) mais reste nettement inférieur à celui constaté sur la vitrocéramique correspondant à l'exemple comparatif 2 (Kanger^{®} non poli), jugé non acceptable. L'écart de brillance (en valeur absolue) est supérieur à celui constaté sur la vitrocéramique correspondant à l'exemple comparatif 3 (Kanger^{®} poli) mais la fabrication de cette vitrocéramique requiert une étape supplémentaire de polissage par rapport aux vitrocéramiques selon les exemples de l'invention que l'on souhaite éviter en raison du surcoût et de la complexité de la mise en oeuvre de cette étape.

Les profils de texturation selon l'invention permettent d'atteindre un compromis qui répond à la fois à la demande de masquage des défauts pouvant se produire pendant le processus de fabrication des plaques et à la demande de limitation des écarts de brillance entre les zones impactées par l'abrasion et celles non abrasées.

Les profils de texturation selon l'invention sont tout particulièrement adaptés aux plaques vitrocéramiques noires ou sombres mais pourraient également être appliqués avec avantage aux vitrocéramiques blanches opalescente, claires ou transparentes dans la mesure où ils sont susceptibles de modifier l'aspect de surface.

L'invention a ainsi permis la mise au point, de manière simple et économique, d'un produit vitrocéramique dont la surface supérieure masque les défauts verriers pouvant se produire au cours du processus de fabrication et où l'abrasion ne génère qu'une très faible variation de brillance ; tout en respectant les contraintes, notamment thermiques et mécaniques, propres aux utilisations desdits produits, et en conservant des produits en vitrocéramique pérennes et d'entretien facile.

Les articles selon l'invention peuvent notamment être utilisées avec avantage pour réaliser une nouvelle gamme de plaques de cuisson pour cuisinières ou tables de cuisson ou une nouvelle gamme de tables de travail, consoles, crédences, ilots centraux, ou inserts de cheminée, etc.

## Revendications

1. Article vitrocéramique, comprenant au moins un substrat, tel qu'une plaque, en vitrocéramique, ledit substrat présentant une face comportant une micro texturation telle que la rugosité de surface moyenne arithmétique, Ra, mesurée selon la norme ISO 4287, est comprise entre 0,14 et 0,40 µm, de préférence entre 0,15 et 0,30 µm.

2. Article vitrocéramique selon la revendication 1, **caractérisé en ce que** la rugosité totale Rt, mesurée selon la norme ISO 4287, est comprise entre 1,15 et 5,00 µm, de préférence entre 1,25 et 3,00 µm.

3. Article vitrocéramique selon l'une quelconque des revendications 1 et 2, **caractérisé en ce que** ledit substrat est à base d'une vitrocéramique noire transparente de 3 à 6 mm, ayant de manière intrinsèque une transmission lumineuse TL sous illuminant D65 inférieure à 20%, de préférence inférieure à 10% et une transmission optique inférieure à 30%, de préférence inférieure à 20%, pour une longueur d'onde de 625 nm.

4. Article vitrocéramique selon l'une quelconque des revendications précédentes, **caractérisé en ce que** la micro texturation présente un facteur d'asymétrie, Ssk, compris entre -0,2 et -1,1 µm, de préférence entre -0,3 et -1,0 µm.

5. Article vitrocéramique selon l'une quelconque des revendications précédentes, **caractérisé en ce que** la micro texturation présente une hauteur maximale des pics, Sp, comprise entre 0,7 et 10,0 µm, de préférence comprise entre 0,8 et 5,0 µm.

6. Article vitrocéramique selon l'une quelconque des revendications précédentes, **caractérisé en ce que** la micro texturation présente une profondeur maximale des creux, Sv, comprise entre 0,7 et 10,0 µm, de préférence entre 0,8 et 5,0 µm.

7. Article vitrocéramique selon l'une quelconque des revendications précédentes, **caractérisée en ce que** le pourcentage de la surface à plus de 0,8 µm du maximum de distribution des hauteurs est compris entre 2 et 8 %, de préférence entre 2 et 4%.

8. Article vitrocéramique selon l'une quelconque des revendications précédentes, **caractérisée en ce que** l'aire moyenne des creux est comprise entre 2 et 10*10⁻³ mm², de préférence entre 3 et 8*10⁻³ mm².

9. Article vitrocéramique selon l'une quelconque des revendications précédentes, **caractérisé en ce que** la face inférieure présente des picots de forme ellipsoïdale dont la hauteur est comprise entre 60 et 120 µm, de préférence comprise entre 80 et 100 µm.

10. Article vitrocéramique selon la revendication précédente, **caractérisé en ce que** les picots de la face inférieure du substrat sont espacés de 250 à 500 µm, de préférence de 300 à 400 µm, en mesurant la distance bord à bord, à la verticale.

11. Article vitrocéramique selon l'une quelconque des revendications précédentes, **caractérisé en ce que** l'écart de brillance entre les zones abrasées et les zones non abrasées est inférieur en valeur absolue à 20%, de préférence inférieur à 15%.

12. Procédé de préparation d'un article vitrocéramique selon l'une des revendications précédentes, par laminage de verre mère entre deux rouleaux, dont un a subi un traitement de grenaillage, à l'aide de particules d'une matière ayant une dureté Vickers HV1 comprise entre 3 et 10, de préférence entre 4 et 8 GPa ; le verre mère ainsi laminé est ensuite soumis à un procédé de céramisation.

13. Procédé selon la revendication précédente, **caractérisé en ce que** le rouleau ayant subi le traitement de grenaillage présente une rugosité Ra de 0,6 à 1,2 µm, de préférence de 0,8 à 1 µm.

14. Procédé selon l'une quelconque des revendications 12 et 13, **caractérisé en ce que** le rouleau ayant subi le traitement de grenaillage présente une rugosité Rt supérieure à 4 µm, de préférence 8 µm.

15. Procédé selon l'une quelconque des revendications 12 à 14, **caractérisé en ce que** le rouleau ayant subi un grenaillage n'est pas soumis à un traitement de polissage après le traitement de grenaillage.

## Patentansprüche

1. Glaskeramikartikel, umfassend mindestens ein Substrat, wie zum Beispiel ein Kochfeld, aus Glaskeramik, wobei das Substrat eine Fläche vorweist, die eine Mikrotexturierung derart aufweist, dass die arithmetische mittlere Oberflächenrauheit, Ra, gemäß der ISO-Norm 4287 gemessen, zwischen 0,14 und 0,40 µm, vorzugsweise zwischen 0,15 und 0,30 µm liegt.

2. Glaskeramikartikel nach Anspruch 1, **dadurch gekennzeichnet, dass** die Gesamtrauheit Rt, gemäß der ISO-Norm 4287 gemessen, zwischen 1,15 und 5,00 µm, vorzugsweise zwischen 1,25 und 3,00 µm liegt.

3. Glaskeramikartikel nach einem der Ansprüche 1 und 2,
**dadurch gekennzeichnet, dass** das Substrat mit einer Basis aus schwarzer transparenter Glaskeramik von 3 bis 6 mm ist, die auf inhärente Weise eine Lichtdurchlässigkeit TL unter Lichtart D65 kleiner als 20 %, vorzugsweise kleiner als 10 % und eine optische Transmission kleiner als 30 %, vorzugsweise kleiner als 20 %, für eine Wellenlänge von 625 nm besitzt.

4. Glaskeramikartikel nach einem der vorstehenden Ansprüche,
**dadurch gekennzeichnet, dass** die Mikrotexturierung einen Asymmetriefaktor, Ssk, zwischen -0,2 und -1,1 µm, vorzugsweise zwischen -0,3 und -1,0 µm vorweist.

5. Glaskeramikartikel nach einem der vorstehenden Ansprüche,
**dadurch gekennzeichnet, dass** die Mikrotexturierung eine maximale Höhe der Spitzen, Sp, zwischen 0,7 und 10,0 µm, vorzugsweise zwischen 0,8 und 5,0 µm vorweist.

6. Glaskeramikartikel nach einem der vorstehenden Ansprüche,
**dadurch gekennzeichnet, dass** die Mikrotexturierung eine maximale Tiefe der Täler, Sv, zwischen 0,7 und 10,0 µm, vorzugsweise zwischen 0,8 und 5,0 µm vorweist.

7. Glaskeramikartikel nach einem der vorstehenden Ansprüche,
**dadurch gekennzeichnet, dass** der Prozentsatz der Oberfläche, die mehr als 0,8 µm von dem Höhenverteilungsmaximum entfernt ist, zwischen 2 und 8 %, vorzugsweise zwischen 2 und 4 % liegt.

8. Glaskeramikartikel nach einem der vorstehenden Ansprüche,
**dadurch gekennzeichnet, dass** die durchschnittliche Fläche der Täler zwischen 2 und 10*10⁻³ mm², vorzugsweise zwischen 3 und 8* 10 -³ mm² liegt.

9. Glaskeramikartikel nach einem der vorstehenden Ansprüche,
**dadurch gekennzeichnet, dass** die Unterseite ellipsenförmige Stifte vorweist, deren Höhe zwischen 60 und 120 µm, vorzugsweise zwischen 80 und 100 µm liegt.

10. Glaskeramikartikel nach dem vorstehenden Anspruch,
**dadurch gekennzeichnet, dass** die Stifte der Unterseite des Substrats um 250 bis 500 µm, vorzugsweise 300 bis 400 µm, indem der Abstand von Rand zu Rand gemessen wird, von der Vertikalen beabstandet sind.

11. Glaskeramikartikel nach einem der vorstehenden Ansprüche,
**dadurch gekennzeichnet, dass** Brillanzabweichung zwischen den geschliffenen Zonen und den nicht geschliffenen Zonen im Absolutwert kleiner als 20 %, vorzugsweise kleiner als 15 % ist.

12. Verfahren zum Herstellen eines Glaskeramikartikels nach einem der vorstehenden Ansprüche, durch Laminieren von Mutterglas zwischen zwei Walzen, von deinen eine einer Kugelstrahlbehandlung unterzogen wurde, mittels Teilchen eines Materials, das eine Vickers-Härte HV1 zwischen 3 und 10, vorzugsweise zwischen 4 und 8 GPa besitzt, wobei das so laminierte Mutterglas dann einem Keramisierungsverfahren unterzogen wird.

13. Verfahren nach dem vorstehenden Anspruch,
**dadurch gekennzeichnet, dass** die Walze, die der Kugelstrahlbehandlung unterzogen wurde, eine Rauheit Ra von 0,6 bis 1,2 µm, vorzugsweise von 0,8 bis 1 µm vorweist.

14. Verfahren nach einem der Ansprüche 12 und 13,
**dadurch gekennzeichnet, dass** die Walze, die der Kugelstrahlbehandlung unterzogen wurde, eine Rauheit Rt über 4 µm, vorzugsweise von 8 µm vorweist.

15. Verfahren nach einem der Ansprüche 12 bis 14,
**dadurch gekennzeichnet, dass** die Walze, die einem Kugelstrahlen unterzogen wurde, nach der Kugelstrahlbehandlung keiner Polierbehandlung unterzogen wird.

## Claims

1. A glass-ceramic article, comprising at least one substrate, such as a plate, made of glass-ceramic, said substrate having a face with a microtexturing such that the arithmetic mean surface roughness, Ra, measured according to standard ISO 4287, is between 0.14 and 0.40 µm, preferably between 0.15 and 0.30 µm.

2. The glass-ceramic article according to claim 1, **characterized in that** the total roughness Rt, measured according to ISO 4287, is between 1.15 and 5.00 µm, preferably between 1.25 and 3.00 µm.

3. The glass-ceramic article according to any one of claims 1 and 2, **characterized in that** said substrate is based on a 3 to 6 mm transparent black glass-ceramic, inherently having a light transmission TL under illuminant D65 of less than 20%, preferably less than 10%, and an optical transmission of less than 30%, preferably less than 20%, for a wavelength of 625 nm.

4. The glass-ceramic article according to any one of the preceding claims, **characterized in that** the microtexturing has an asymmetry factor, Ssk, between -0.2 and -1.1 µm, preferably between -0.3 and -1.0 µm.

5. The glass-ceramic article according to any one of the preceding claims, **characterized in that** the microtexturing has a maximum peak height, Sp, between 0.7 and 10.0 µm, preferably between 0.8 and 5.0 µm.

6. The glass-ceramic article according to any one of the preceding claims, **characterized in that** the microtexturing has a maximum hollow depth, Sv, between 0.7 and 10.0 µm, preferably between 0.8 and 5.0 µm.

7. The glass-ceramic article according to any one of the preceding claims, **characterized in that** the percentage of the surface area more than 0.8 µm from the maximum height distribution is between 2 and 8%, preferably between 2 and 4%.

8. The glass-ceramic article according to any one of the preceding claims, **characterized in that** the average area of the hollows is between 2 and 10*10⁻³ mm², preferably between 3 and 8*10⁻³ mm².

9. The glass-ceramic article according to any one of the preceding claims, **characterized in that** the lower face has ellipsoidal teardrops whose height is between 60 and 120 µm, preferably between 80 and 100 µm.

10. The glass-ceramic article according to the preceding claim, **characterized in that** the teardrops on the underside of the substrate are spaced 250-500 µm, preferably 300-400 µm apart, when measured edge-to-edge, vertically.

11. The glass-ceramic article according to any one of the preceding claims, **characterized in that** the gloss difference between the abraded and non-abraded areas is less than 20% in absolute value, preferably less than 15%.

12. A method for preparing a glass-ceramic article according to any of the preceding claims, by rolling mother glass between two rollers, one of which has undergone a shot-peening treatment, with particles of a material having a Vickers hardness HV1 of between 3 and 10, preferably between 4 and 8 GPa; the mother glass thus rolled is then subjected to a ceramization process.

13. The method according to the preceding claim, **characterized in that** the roller which has undergone the shot-peening treatment has a roughness Ra of 0.6 to 1.2 µm, preferably 0.8 to 1 µm.

14. The method according to any one of claims 12 and 13, **characterized in that** the roller that has undergone the shot peening treatment has a roughness Rt greater than 4 µm, preferably 8 µm.

15. The method according to any one of claims 12 to 14, **characterized in that** the shot-peened roller is not subjected to a polishing treatment after the shot-peening treatment.
